# DEMANDE DE BREVET EUROPEEN

(11) **EP 1 271 048 A1**
(43) Date de publication de la demande: **02.01.2003**
(21) Numéro de dépôt: 02291512.8
(22) Date de dépôt: 17.06.2002
(51) Int. Cl.: F21S 8/10, F21V 7/00

(54) **Dispositif d'éclairage ou de signalisation pour véhicule automobile**

(30) Priorité: 26.06.2001 FR 0108447
(71) Demandeur: VALEO VISION, 93012 Bobigny Cédex (FR)
(72) Inventeur: Brun, Norbert, c/o Valeo Vision, 93012 Bobigny Cédex (FR)

(57) **Abrégé**

La présente invention concerne un dispositif d'éclairage et de signalisation pour véhicule automobile, comportant au moins une source lumineuse principale (12) associée à un réflecteur (14) pour émettre à travers une glace (16) un faisceau lumineux de photométrie prédéterminée selon un axe optique (X-X').

Selon la présente invention, le dispositif d'éclairage ou de signalisation comporte au moins une deuxième source lumineuse (18) située en dehors de l'axe optique (X-X') et des moyens de renvoi (20) pour renvoyer les rayons lumineux émis par la deuxième source lumineuse (18) selon une direction sensiblement parallèle à l'axe optique (X-X').

## Description

La présente invention concerne les dispositifs d'éclairage ou de signalisation pour véhicules automobiles, et plus particulièrement ceux qui sont du type comportant plusieurs fonctions.

Il est courant de rassembler dans un seul boîtier plusieurs fonctions d'éclairage ou de signalisation, de manière à simplifier le câblage électrique de ces différentes fonctions dans un véhicule automobile. Chaque fonction comporte une source lumineuse, un réflecteur et éventuellement une glace, ces différents éléments étant agencés pour fournir un faisceau d'éclairage ou de signalisation dont les caractéristiques géométriques et photométriques doivent être conformes à différentes réglementations.

Chaque fonction nécessite ainsi un volume minimal pour son implantation dans un dispositif d'éclairage ou de signalisation particulier. Cependant, le volume disponible pour implanter des dispositifs d'éclairage ou de signalisation est de plus en plus réduit aussi bien à l'avant qu'à l'arrière d'un véhicule automobile moderne. En effet, les contraintes de l'aérodynamique et les conceptions des stylistes conduisent à des formes souvent très différentes de celles qui résultent uniquement de considérations techniques. Il en résulte que dans de nombreux cas, l'espace disponible pour regrouper ces fonctions dans un même boîtier est insuffisant, et qu'il est alors nécessaire de répartir différentes fonctions dans des boîtiers différents, d'où un accroissement du coût et une augmentation du temps de câblage et de montage.

La présente invention se place dans ce contexte et elle a pour but de proposer un dispositif d'éclairage ou de signalisation qui permette facilement de disposer une fonction d'éclairage et de signalisation supplémentaire, un tel dispositif d'éclairage ou de signalisation devant en outre être simple à assembler, fiable dans son fonctionnement, les performances photométriques répondant à la réglementation en vigueur, un tel dispositif devant en outre être peu onéreux.

L'invention a donc pour objet un dispositif d'éclairage et de signalisation pour véhicule automobile, comportant au moins une source lumineuse principale associée à un réflecteur pour émettre à travers une glace un faisceau lumineux de photométrie prédéterminée selon un axe optique.

Selon la présente invention, il comporte au moins une deuxième source lumineuse située en dehors de l'axe optique et des moyens de renvoi pour renvoyer les rayons lumineux émis par la deuxième source lumineuse selon une direction sensiblement parallèle à l'axe optique.

Selon d'autres caractéristiques de la présente invention :
- les rayons lumineux émis par la deuxième source et renvoyés par les moyens de renvoi forment un faisceau lumineux répondant à une deuxième photométrie prédéterminée ;
- les moyens de renvoi forment une image virtuelle de la deuxième source située au voisinage d'un plan horizontal passant par l'axe optique ;
- les moyens de renvoi sont constitués par la face avant d'une lame partiellement réfléchissante ;
- la face arrière de la lame partiellement réfléchissante a subi un traitement antireflet ;
- un cache est disposé entre la deuxième source lumineuse et la glace ;
- la deuxième source lumineuse est une diode électroluminescente ;
- le dispositif d'éclairage ou de signalisation comporte au moins deux sources lumineuses principales associées chacune à un réflecteur pour émettre à travers une glace au moins deux faisceaux lumineux de photométries prédéterminées selon au moins deux axes optiques sensiblement parallèles, et il comporte au moins une deuxième source lumineuse située en dehors du plan formé par les axes optiques et des moyens de renvoi pour renvoyer les rayons lumineux émis par la deuxième source lumineuse selon une direction sensiblement parallèle aux axes optiques ;
- les moyens de renvoi sont constitués par la face avant d'une lame partiellement réfléchissante disposée devant les réflecteurs ;
- les moyens de renvoi sont constitués par la face avant de lames partiellement réfléchissantes disposées chacune devant un réflecteur.

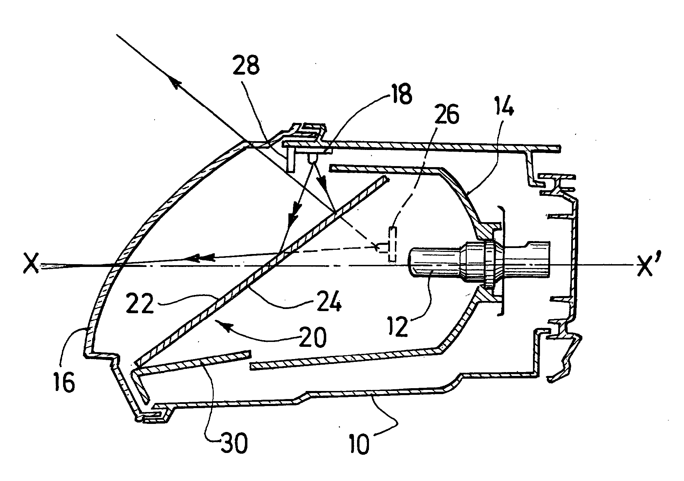

D'autres buts, caractéristiques et avantages de la présente invention ressortiront clairement de la description qui va maintenant être faite d'un exemple de réalisation donné à titre non limitatif en référence aux dessins annexés sur lesquels :
- la Figure unique représente une vue schématique en coupe d'un dispositif d'éclairage et de signalisation réalisé conformément à la présente invention.

On voit sur la Figure un dispositif d'éclairage et de signalisation, comportant de manière connue dans un boîtier 10 une source lumineuse principale 12 et un miroir réflecteur 14. Les rayons lumineux émis par la source 12 sont réfléchis par le miroir 14 vers une glace de fermeture 16 pour former un faisceau d'éclairage ou de signalisation dirigé selon l'axe optique X'-X du dispositif d'éclairage ou de signalisation. Le réflecteur 14 et éventuellement la glace 16 sont réalisés de manière à conférer à ce faisceau une répartition spatiale et une photométrie prédéterminées, en réalisant par exemple un faisceau de route ou de croisement.

Conformément à la présente invention, une deuxième source lumineuse 18, par exemple une diode électroluminescente, dans l'exemple représenté sur la Figure, est prévue dans le dispositif d'éclairage ou de signalisation pour remplir une deuxième fonction. La source 18 est située en dehors de l'axe optique X-X', en étant par exemple fixée sur le boîtier 10. Des moyens de renvoi, tels qu'une lame partiellement réfléchissante 20, sont disposés en regard de la deuxième source lumineuse pour renvoyer les rayons lumineux émis par la deuxième source lumineuse 18 dans la direction de l'axe optique X-X' compatible avec les distributions de lumière nécessaires pour respecter les réglementations et l'effet désiré.

La lame partiellement réfléchissante est inclinée sur l'axe optique X-X', de manière à former une image virtuelle 26 de la deuxième source 18 située de préférence au voisinage d'un plan horizontal passant par l'axe optique X-X'.

Les rayons lumineux émis par la deuxième source 18 et renvoyés par la lame partiellement réfléchissante semblent donc provenir de l'image virtuelle de la deuxième source 18, et forment un faisceau lumineux répondant à une deuxième photométrie prédéterminée. Par exemple, le faisceau engendré par la source principale 12 peut être un faisceau de croisement, et le faisceau engendré par la deuxième source 18 peut répondre à une photométrie de lampe de ville, encore appelée veilleuse.

Il est ainsi possible d'obtenir par exemple la fonction lampe de ville dans un dispositif d'éclairage ou de signalisation, sans en accroître l'encombrement, ni en modifier le réflecteur. Lorsque la fonction lampe de ville est désirée, la deuxième source lumineuse 18 est commandée à l'allumage, et elle fournit, par l'intermédiaire de la lame partiellement réfléchissante 20, ou plus exactement de la face avant 22 de cette lame 20, un faisceau lumineux répondant à une réglementation déterminée. Une lame 20 possédant un coefficient de réflexion supérieur à 50% pourra être utilisée pour obtenir les meilleurs résultats. On pourra par ailleurs donner à la lame 20 une inclinaison sur l'axe optique telle que la réflexion qu'elle fournira soit optimisée. On pourra également utiliser une lame 20 ayant des parties planes et des parties courbes, de manière à optimiser la réflexion des rayons lumineux émis par la deuxième source et à disposer l'image virtuelle de cette deuxième source en un endroit prédéterminé.

Lorsque la fonction feu de croisement est désirée, la source principale 12 est commandée à l'allumage, pour fournir le faisceau de croisement désiré. Les rayons lumineux émis par la source principale 12 et réfléchis par le réflecteur 14 traversent la lame partiellement réfléchissante 20, la glace 16 et forment le faisceau de croisement réglementaire. En effet, la lame partiellement réfléchissante n'apporte pas d'autre modification aux rayons lumineux qui la traversent qu'une légère translation parallèlement à leur direction initiale, la grandeur de cette translation étant fonction de l'épaisseur de la lame 20. En choisissant une lame de faible épaisseur, cette translation peut être considérée comme négligeable.

De manière à éviter que des réflexions parasites sur la face arrière 24 de la lame 20 ne viennent perturber la photométrie du faisceau final, on pourra avantageusement prévoir de faire subir à la face arrière 24 de la lame partiellement réfléchissante 20 un traitement antireflet. Ainsi, très peu de rayons lumineux seront absents du faisceau final.

De manière à dissimuler la deuxième source lumineuse 18, on pourra disposer, entre elle et la glace 16, un cache 28, qui n'interfère pas avec les rayons lumineux de la fonction d'éclairage procurée par la lampe 12 ni avec les rayons lumineux émis par la deuxième source 18 et réfléchis par la lame 20. Une telle disposition présente l'avantage de dissimuler la deuxième source lumineuse 18, même lorsqu'elle est éteinte. L'esthétique du dispositif d'éclairage ou de signalisation n'est donc affectée en aucune manière par la présence de la source lumineuse 18.

On pourra avantageusement tirer profit du masque 30 déjà présent dans le dispositif d'éclairage ou de signalisation, et utilisé pour masquer les parties du boîtier du dispositif d'éclairage ou de signalisation qui seraient visibles entre le réflecteur 14 et la glace 16, pour réaliser le cache 28.

Ainsi, lorsque la deuxième source lumineuse 18 est allumée, seule est visible son image virtuelle 26 dans la lame partiellement réfléchissante 20. Il est alors possible de choisir l'emplacement de cette deuxième source lumineuse 18, ainsi que l'inclinaison de la lame partiellement réfléchissante 20, pour donner à cette image virtuelle 26 n'importe quel emplacement dans le dispositif d'éclairage ou de signalisation ainsi réalisé.

On pourra également, dans un dispositif d'éclairage ou de signalisation comportant plusieurs réflecteurs tels que 14 associés chacun à une source lumineuse telle que 12 et disposés les uns à côté des autres pour engendrer des faisceaux de photométries différentes, installer une lame partiellement réfléchissante 20 de manière à ce qu'elle s'étende devant l'ensemble de ces réflecteurs, et des deuxièmes sources lumineuses telles que 18, de manière à ce que leurs images virtuelles soient visibles en des endroits prédéterminés, par exemple entre deux réflecteurs, c'est à dire en des endroits où il est physiquement impossible de disposer une source lumineuse. On pourra par exemple implanter dans un dispositif d'éclairage ou de signalisation des deuxièmes sources colorées, de manière à ce que leurs images virtuelles ne soient pas superposées à celles de fonctions existantes pour être visibles quand les fonctions existantes sont allumées, pour par exemple réaliser la fonction d'indicateur lumineux de changement de direction. Selon l'effet recherché ou l'emplacement disponible, on pourra disposer autant de lames partiellement réfléchissantes que de deuxièmes sources lumineuses de manière à ce que leurs images virtuelles soient situées en des endroits prédéterminés.

On a donc bien réalisé selon la présente invention un dispositif d'éclairage ou de signalisation qui permet facilement d'installer une fonction d'éclairage et de signalisation supplémentaire sans aucune modification de l'encombrement du dispositif d'éclairage ou de signalisation. Un tel dispositif d'éclairage ou de signalisation est particulièrement simple, fiable et peu onéreux, puisqu'il ne nécessite que l'installation d'une ou plusieurs deuxièmes sources lumineuses, d'une lame partiellement réfléchissante, et éventuellement d'un cache pour atteindre le but recherché. Un tel résultat permet par ailleurs d'obtenir des effets de style que ne permettaient pas les dispositifs d'éclairage ou de signalisation de l'art antérieur.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que plusieurs deuxièmes sources lumineuses pourront être utilisées, en les disposant à des endroits prédéterminés du dispositif d'éclairage ou de signalisation pour que leurs images virtuelles soient disposées en des endroits prédéterminés. On pourra alors disposer les deuxièmes sources lumineuses selon un motif particulier pour que leurs images virtuelles soient disposées selon ce même motif. Toute figure géométrique simple pourra ainsi être réalisée. C'est ainsi également qu'on pourra utiliser, à la place de diodes électroluminescentes, des lampes à incandescence, par exemple du type de celles qui sont couramment utilisées pour remplir la fonction de lampe de ville. De même, la lame partiellement réfléchissante pourra avoir une autre configuration que plane, en étant par exemple incurvée, sa concavité étant tournée vers l'avant ou vers l'arrière selon l'effet désiré.

## Revendications

1. Dispositif d'éclairage et de signalisation pour véhicule automobile, comportant au moins une source lumineuse principale (12) associée à un réflecteur (14) pour émettre à travers une glace (16) un faisceau lumineux de photométrie prédéterminée selon un axe optique (X-X'), **caractérisé en ce qu**'il comporte au moins une deuxième source lumineuse (18) située en dehors de l'axe optique (X-X') et des moyens de renvoi (20) pour renvoyer les rayons lumineux émis par la deuxième source lumineuse (18) selon une direction sensiblement parallèle à l'axe optique (X-X').

2. Dispositif selon la revendication 1, **caractérisé en ce que** les rayons lumineux émis par la deuxième source (18) et renvoyés par les moyens de renvoi (20) forment un faisceau lumineux répondant à une deuxième photométrie prédéterminée.

3. Dispositif selon la revendication 1, **caractérisé en ce que** les moyens de renvoi (20) forment une image virtuelle (26) de la deuxième source (18) située au voisinage d'un plan horizontal passant par l'axe optique (X-X').

4. Dispositif selon la revendication 3, **caractérisé en ce que** les moyens de renvoi (20) sont constitués par la face avant (22) d'une lame partiellement réfléchissante (20).

5. Dispositif selon la revendication 4, **caractérisé en ce que** la face arrière de la lame partiellement réfléchissante (20) a subi un traitement antireflet.

6. Dispositif selon la revendication 1, **caractérisé en ce qu'**un cache (28) est disposé entre la deuxième source lumineuse (18) et la glace (16).

7. Dispositif selon l'une quelconque des revendications précédentes, **caractérisé en ce que** la deuxième source lumineuse (18) est une diode électroluminescente.

8. Dispositif selon l'une quelconque des revendications précédentes, comportant au moins deux sources lumineuses principales (12) associées chacune à un réflecteur (14) pour émettre à travers une glace (16) au moins deux faisceaux lumineux de photométries prédéterminées selon au moins deux axes optiques (X-X') sensiblement parallèles, **caractérisé en ce qu'**il comporte au moins une deuxième source lumineuse (18) située en dehors du plan formé par les axes optiques (X-X') et des moyens de renvoi (20) pour renvoyer les rayons lumineux émis par la deuxième source lumineuse (18) selon une direction sensiblement parallèle aux axes optiques (X-X').

9. Dispositif selon la revendication 8, **caractérisé en ce que** les moyens de renvoi (20) sont constitués par la face avant (22) d'une lame partiellement réfléchissante (20) disposée devant les réflecteurs (14).

10. Dispositif selon la revendication 8, **caractérisé en ce que** les moyens de renvoi (20) sont constitués par la face avant (22) de lames partiellement réfléchissantes (20) disposées chacune devant un réflecteur (14).
